Europäisches Patentamt

European Patent Office

Office européen des brevets

(11) Veröffentlichungsnummer: **0 500 001 A1**

## (12) EUROPÄISCHE PATENTANMELDUNG

(21) Anmeldenummer: **92102572.2**

(22) Anmeldetag: **15.02.92**

(51) Int. Cl.5: **B29C 53/82**, B29C 33/76, B29C 33/04, B65H 75/24

(30) Priorität: **22.02.91 DE 4105560**

(43) Veröffentlichungstag der Anmeldung: **26.08.92 Patentblatt 92/35**

(84) Benannte Vertragsstaaten: **DE FR GB IT**

(71) Anmelder: **Continental Aktiengesellschaft Königsworther Platz 1 W-3000 Hannover 1(DE)**

(72) Erfinder: **Spöring, Günter Leharweg 8 W-3410 Northeim(DE)**

(54) **Heiztrommel für ein zu vulkanisierendes Drucktuch.**

(57) Eine Heiztrommel zur Aufwicklung eines in einer Druckkammer zu vulkanisierenden Drucktuches, das eine Deckplatte aus elastomerem Werkstoff aufweist. Um die während der Vulkanisation auftretenden Druckspannungen im Drucktuchwickel zu reduzieren, ist die Heiztrommel hohl und dünnwandig ausgebildet. Die Trommelwand (2) weist eine achsparallel verlaufende Trennfuge (5) auf. Die Trennfuge (5) ist von einer Blechzunge (6) abgedeckt, die einseitig an einer Trennfugenseite (8) befestigt ist, während der gegenüberliegende freie Abschnitt (11) unter Vorspannung flächig auf der Trommeloberfläche aufliegt.

FIG. 2

Die Erfindung betrifft eine Heiztrommel zur Aufwicklung eines in einer Druckkammer zu vulkanisierenden Drucktuchs, das eine Deckplatte aus elastomerem Werkstoff aufweist.

An die Qualität von Drucktüchern werden steigende Anforderungen gestellt, um einwandfreie Druckerzeugnisse zu erhalten.

Es ist bekannt, den fertigkonfektionierten Drucktuchrohling auf einer Heiztrommel aufzuwickeln und diesen Wickel in einer Druckkammer zu vulkanisieren.

Es wurde festgestellt, daß die empfindlichen Drucktücher nach der Vulkanisation Fehlerstellen in der Deckplatte infolge von Abdrücken der Anlegestelle des Drucktuchwickels aufweist. Auch die Oberflächenprägung durch den üblicherweise mit aufgewickelten Prägekarton ist in den inneren Lagen stärker als in den äußeren.

Das Abdrücken der Anlegestelle und die unterschiedlich starke Prägung durch den Prägekarton von dem Inneren des Wickels nach außen wird darauf zurückgeführt, daß es bei der Vulkanisation des Drucktuchwickels im Innenwickel zu höheren Druckspannungen kommt, weil die hohe Wärmeausdehnungen der Heiztrommel und des Wickels bei der Vulkanisation den Innendruck im Drucktuchwickel erhöhen. Die Vergrößerung des Durchmessers der Heiztrommel bewirkt einen verstärkten Abdruck der Anlegestelle in den ersten Wickellagen des Drucktuches, was die Notwendigkeit des Entfernens dieser Anfangslänge bewirkt.

Der Erfindung liegt die Aufgabe zugrunde, eine Heiztrommel der eingangs geschilderten Art derart auszugestalten, daß die Qualität des fertigen Drucktuchs nachteilig beeinflussende Abdrücke oder unterschiedlich starke Prägungen minimiert werden.

Die Aufgabe wird erfindungsgemäß durch die im Kennzeichen des Anspruchs 1 genannten Merkmale gelöst.

Eine Wärmeausdehnung der Heiztrommel bei der Vulkanisation bewirkt nur noch eine reduzierte Durchmesservergrößerung der Heiztrommel. Druckspannungen im Wickel werden minimiert, weil die Wärmeausdehnung durch die überdeckte Trennfuge größtenteils kompensiert wird. Die einseitig befestigte Blechzunge kann die Wärmeausdehnung der Heiztrommel und des Wickelpaketes mit ihrem freien Abschnitt auf der Trommeloberfläche ausgleichen.

Der Vulkanisationsdruck im Drucktuchwickel stellt sich über den Querschnitt gleichmäßiger ein, was zu einer geringeren unterschiedlichen Prägung durch den Prägekarton und einem geringeren Abdrücken der Anlegestelle führt.

In vorteilhafter Ausgestaltung der Erfindung ist die Dicke der Blechzunge gleich oder annähernd gleich der Dicke des Drucktuchrohlings. Dadurch wird eine Anlegestelle geschaffen, die keine Druckstelle im Drucktuch hinterläßt.

Eine weitere vorteilhafte Ausgestaltung der Erfindung wird im Anspruch 3 gekennzeichnet. Die der Befestigungsseite der Blechzunge gegenüberliegende Trommeloberfläche wird derart abgearbeitet, daß sich die Blechzunge in die kreisrunde Oberfläche der Heiztrommel so einlegt, daß die Rundung durchläuft.

Eine weitere vorteilhafte Ausgestaltung der Erfindung wird in den Ansprüchen 4 und 5 gekennzeichnet. Das radial wirkende Abdrückelement ermöglicht das Klemmen des Prägekartons.

Durch die Erfindung wird eine Heiztrommel geschaffen, mit der eine aufgewickelte Drucktuchlänge vulkanisiert werden kann, ohne daß es zu fehlerhaften Abdrücken oder unterschiedlichen Prägungen kommt.

Anhand der Zeichnung wird nachstehend ein Ausführungsbeispiel der Erfindung näher erläutert. Es zeigt

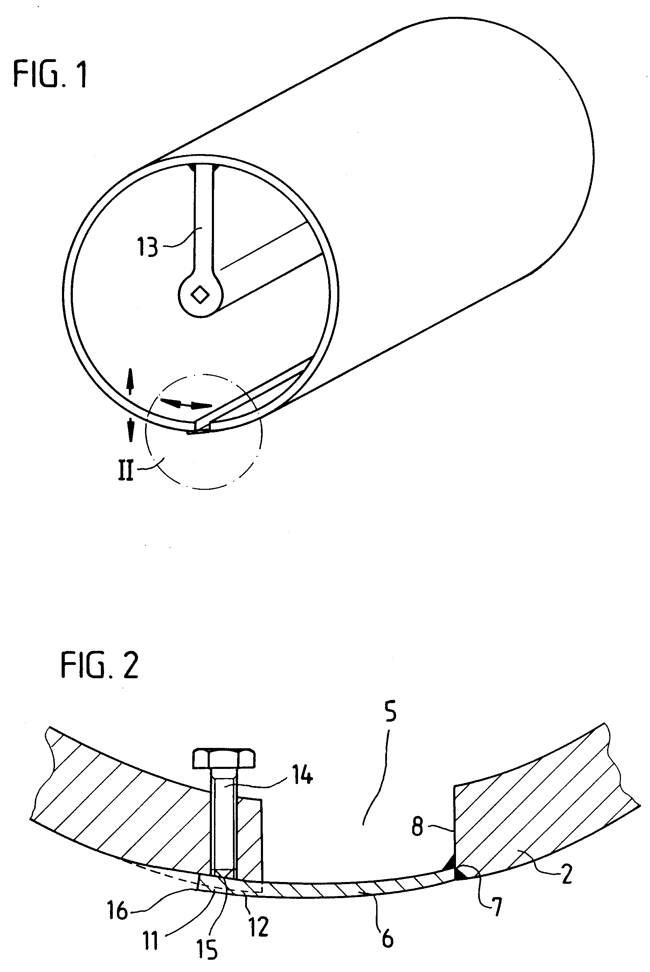

Fig. 1    eine Heiztrommel in perspektivischer Seitenansicht;

Fig. 2    in vergrößerter Darstellung den in der Fig. 1 gezeichneten Ausschnitt.

Die Heiztrommel weist eine Zylinderwand 2 auf, die durch eine radial und achsparallel verlaufende Zentrierhalterung 13 auf einer Achse geführt ist.

Die Zylinderwand 2 ist durch eine achsparallel verlaufende Trennfuge 5 unterbrochen. Die Zentrierhalterung 13 ist der Dehnungsfuge 5 gegenüberliegend angeordnet.

Die Trennfuge 5 ist von einer Blechzunge 6 abgedeckt, die einseitig mit einer Stirnkante 7 an einer Trennfugenseite 8 in Ausrichtung zur Trommeloberfläche angeschweißt ist.

Der gegenüberliegende freie Abschnitt 11 der Blechzunge 6 liegt unter Vorspannung flächig auf der Trommeloberfläche auf, die in diesem Bereich vom Verlauf des runden Umfangs gemäß Linie 12 abgearbeitet ist, um eine durchlaufende Rundung der Aufwickeloberfläche zu ergeben. Im Bereich des freien Abschnittes 11 der Blechzunge 6 ist die Zylinderwand 2 von einer radial angeordneten Abdrückschraube 14 durchdrungen, die mit ihrer Spitze 15 auf die Innenfläche des freien Abschnittes 11 der Blechzunge 6 wirkt.

Die Dicke der Blechzunge 6 ist geringfügig größer als die Dicke des an die Stirnkante 16 anzulegenden Drucktuchrohlings.

Die Wirkungsweise der vorstehend beschriebenen Vorrichtung ist wie folgt.

Die Abdrückschraube wird mit ihrer Spitze 15 aus der Trommeloberfläche herausgedreht. Dadurch hebt sich der freie Abschnitt 11 der Blechzunge 6 von der Trommeloberfläche ab. In den Spalt zwischen Blechzunge 6 und Trommeloberfläche wird der Anfang einer Prägekartonlage geschoben. Die Abdrückschraube 14 wird so gedreht, daß die unter Vorspannung stehende Blechzunge 6 den Prägekarton einklemmt. Der Beginn des Drucktuchrohlings wird stirnseitig an die Stirnkante 16 der Blechzunge 6 angelegt und mit einem Doppelklebeband auf dem geklemmten Prägekarton befestigt. Prägekarton und Drucktuchrohling werden nun auf die Heiztrommel aufgewickelt.

Der fertige Wickel wird in an sich bekannter Weise in einer Druckkammer unter Heißlufteinwirkung vulkanisiert. Nach dem Vulkanisieren und Abwickeln des fertigen Drucktuches wurde festgestellt, daß bereits die ersten inneren Wickellagen des Drucktuches der Qualität der weiter außen liegenden Wickellagen entsprechen. Ein Abdrücken der Anlegestelle lag nicht mehr vor, so daß die gesamte Länge des Drucktuches als Produkt zur Verfügung stand.

Durch die einseitige Zentrierhalterung 13 und deren Anordnung gegenüber der Trennfuge 5 wird eine große Verformbarkeit der Zylinderwand mit daraus resultierendem Druckspannungsabbau erreicht.

**Patentansprüche**

1. Heiztrommel zur Aufwicklung eines in einer Druckkammer zu vulkanisierenden Drucktuchs, das eine Deckplatte aus elastomerem Werkstoff aufweist,
   **gekennzeichnet durch folgende Merkmale**:
   1) die Heiztrommel ist hohl und dünnwandig ausgebildet,
   2) die Trommelwand (2) weist eine achsparallel verlaufende Trennfuge (5) auf,
   3) die Trennfuge (5) ist von einer Blechzunge (6) abgedeckt,
   4) die Blechzunge (6) ist einseitig an einer Trennfugenseite (8) befestigt, während der gegenüberliegende freie Abschnitt (11) der Blechzunge (6) unter Vorspannung flächig auf der Trommeloberfläche aufliegt.

2. Heiztrommel nach Anspruch 1, dadurch gekennzeichnet, daß die Dicke der Blechzunge (6) annähernd gleich der Drucktuchdicke ist.

3. Heiztrommel nach Anspruch 1 oder 2, dadurch gekennzeichnet, daß die Trommeloberfläche im Bereich des freien Abschnittes (11) der Blechzunge (6) derart abgetragen ist, daß die Rundung der Trommeloberfläche über die Blechzunge (6) durchläuft.

4. Heiztrommel nach einem der Ansprüche 1 bis 3, dadurch gekennzeichnet, daß im Bereich des freien Abschnittes (11) der Blechzunge (6) ein die Trommelwand (2) radial durchdringendes, auf die Blechzunge (6) wirkendes Abdrückelement (14) angeordnet ist.

5. Heiztrommel nach Anspruch 4, dadurch gekennzeichnet, daß das Abdrückelement (14) als Gewindeschraube ausgebildet ist.

6. Heiztrommel nach einem der Ansprüche 1 bis 5, dadurch gekennzeichnet, daß die Zylinderwand (2) lediglich durch eine innere, radial und achsparallel verlaufende Zentrierhalterung auf der Drehachse angeordnet ist.

7. Heiztrommel nach Anspruch 6, dadurch gekennzeichnet, daß die Zentrierhalterung (13) der Trennfuge (5) gegenüberliegend angeordnet ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-2 625 338 (MCARN) <br> * Abbildung 8 * <br> --- | 1-2 | B29C53/82 <br> B29C33/76 <br> B29C33/04 <br> B65H75/24 |
| A | DE-A-3 314 489 (CONTINENTAL GUMMI-WERKE AG) <br> * Zusammenfassung; Abbildungen * <br> --- | 1 | |
| A | DE-A-2 532 509 (CONTINENTAL GUMMI-WERKE AG) <br> * Anspruch 1; Abbildung * <br> --- | 1 | |
| A | DE-A-2 352 373 (SARRES) <br> * Abbildungen * <br> --- | 1 | |
| A | PATENT ABSTRACTS OF JAPAN <br> vol. 014, no. 222 (E-0926)10. Mai 1990 <br> & JP-A-2 056 170 ( FUJI PHOTO FILM CO LTD ) <br> * Zusammenfassung; Abbildungen * <br><br> ----- | | |

**RECHERCHIERTE SACHGEBIETE (Int. Cl.5 )**

F28F
B29C
B65H
B29D

Der vorliegende Recherchenbericht wurde für alle Patentansprüche erstellt

| Recherchenort | Abschlußdatum der Recherche | Prüfer |
|---|---|---|
| DEN HAAG | 25 MAERZ 1992 | PIPPING L.E.L. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)